Europäisches Patentamt

European Patent Office

Office européen des brevets

(19)

(11) Publication number: **0 015 017**
**B1**

(12) **EUROPEAN PATENT SPECIFICATION**

(45) Date of publication of patent specification: **29.09.82**

(51) Int. Cl.³: **F 24 J 3/02**

(21) Application number: **80200092.7**

(22) Date of filing: **04.02.80**

(54) Heat transport tube solar collector and system comprising at least such a collector.

(30) Priority: **09.02.79 NL 7901030**

(43) Date of publication of application:
**03.09.80 Bulletin 80/18**

(45) Publication of the grant of the patent:
**29.09.82 Bulletin 82/39**

(84) Designated Contracting States:
**CH DE FR GB IT NL SE**

(56) References cited:
**DE - A - 2 601 976**
**US - A - 4 119 085**

(73) Proprietor: **N.V. Philips' Gloeilampenfabrieken**
**Groenewoudseweg 1**
**NL-5621 BA Eindhoven (NL)**

(72) Inventor: **Bloem, Herman**
**c/o INT. OCTROOIBUREAU B.V. Prof. Holstlaan 6**
**NL-5656 AA Eindhoven (NL)**

(74) Representative: **Melio, Jan Dirk et al,**
**INTERNATIONAAL OCTROOIBUREAU B.V. Prof.**
**Holstlaan 6**
**NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Heat transport tube solar collector and
system comprising at least such a collector

The invention relates to a solar energy collecting system, comprising at least one solar collector with at least one heat transport tube which comprises an end portion which is sealed at its free end and which comprises an evaporation zone, and an end portion with a condensation zone which is arranged at a level which is higher than that of the evaporation zone during operation, a quantity of evaporable heat transport medium which is present in the heat transport tube and which evaporates in the evaporation zone during operation and which condenses in the condensation zone by giving off heat to a liquid medium flowing through a duct.

A solar energy collecting system of the described kind is known from US—A—4,119,085.

The heat transport tube of the known system consists of a sealed tube. The condenser part of the tube has connected to it a metal flange which provides, by intimate contact with a metal element on the duct system for the heat absorbing medium, a heat-conductive connection between a heat transport medium in the tube and the heat absorbing medium in the duct system. The metal flange and the metal element are firmly held together, for example, by means of bolts, and the transfer of heat can be improved by application of a suitably heat conductive agent, such as grease, between the flange and the element.

The known solar energy collecting system has some drawbacks.

The heat exchanger formed by the condenser wall, the flange, the element and the wall of the duct system makes the construction complex and expensive. Moreover, the heat exchanger introduces thermal efficiency losses. Furthermore, when a plurality of solar collectors are used in a panel, a comparatively large part of the panel surface is occupied by the heat exchanger, so that the effective collector surface is comparatively small. Moreover, the weight of such a solar panel is comparatively large.

The present invention has for its object to provide an improved solar energy collecting system of the described kind which has a simpler and cheaper construction, a higher thermal efficiency and a reduced weight and volume.

In order to realize this object, the solar collector in accordance with the invention is characterized in that at the area of the condensation zone the heat transport tube is in open communication with the duct for a direct exchange of heat between the two media.

The condenser end portion of the heat transport tube can be simply connected to the duct system in open communication therewith.

During operation, the vapour developed in the heat transport tube condenses against the colder liquid in the duct system in direct contact with this liquid. Due to the absence of a heat exchanger wall between the vapour and the liquid, the thermal efficiency of the system is high and the system as such has a simple construction, is compact and its weight is low.

The invention furthermore relates to a heat transport tube solar collector which is suitable for use in the solar energy collecting system.

The invention will be described in detail hereinafter with reference to the drawing which diagrammatically shows, by way of example, two embodiments of the solar energy collecting system (not to scale).

Figure 1a is a longitudinal sectional view of a heat transport tube solar collector which is in open communication with a duct system.

Figure 1b is a cross-sectional view of the heat transport tube solar collector at the area of the line Ib—Ib of Figure 1a.

Figure 2 is a plan view of a solar panel which comprises a plurality of heat transport tube solar collectors which are all in open communication with one central duct.

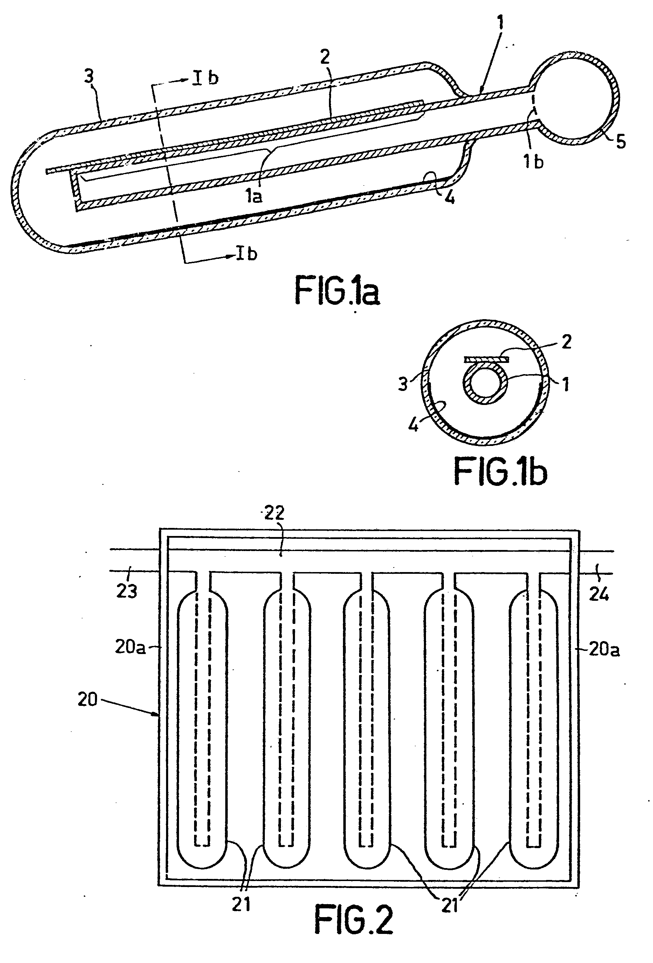

The reference numeral 1 in Figure 1 denotes a heat transport tube which comprises an evaporation zone 1a and a condensation zone 1b. The evaporation zone 1a is connected in a heat-conductive manner with a flat plate 2 for absorbing solar radiation incident during operation. The absorber plate 2 is connected to the tube 1, for example, by soldering or welding. The solar radiation absorbing side of the plate 2 is preferably black.

The portion of the tube 1 which comprises the evaporation zone 1a is accommodated, together with the absorber plate 2, in an evacuated transparent envelope 3 of glass or a synthetic material, the lower half of which is provided on the inner side with a solar radiation reflective layer 4 of, for example, aluminium or silver (Figure 1b). If desired, the inner side of the bulb may be provided (completely or only the upper half) with a light-transmitting but infrared reflective layer of, for example, indium oxide.

The projecting part of the tube 1 is connected to and is in open communication with a duct 5 which forms part of a duct system (not shown) for, for example, hot water supply or central heating in which a liquid such as water can circulate.

When the installation is put into operation, the heat transport tube is filled with liquid due to the inclined arrangement of the solar collector. Due to the incident solar radiation, the liquid in the evaporation zone 1a is heated and starts to boil at a given temperature which is dependent of the pressure in the open or closed system which includes the duct 5. The vapour formed rises in the tube 1 and condenses against the colder liquid circulating in the duct 5 while giving off heat. The condensation area is diagrammatically denoted by the reference 1b. Due to the circulation of the liquid in the duct 5, this liquid is uniformly heated. The condensate returns to the evaporation zone under the influence of gravity. Thus, the evaporation zone remains filled with liquid during normal operation.

The liquid in the duct 5 can circulate through the system under the influence of a pumping device. However, the circulation can alternatively be realized by a thermal siphon effect on the basis of differences in the density of cold and hot liquid in the system. Warmer liquid having a lower specific weight then rises through colder liquid having a higher specific weight.

Obviously, the heat transport tube 1 may also be detachably connected to the duct 5.

Figure 2 is a plan view of a solar panel with a container 20 which accommodates a plurality of heat transport tubes solar collectors 21 which are all connected to and are in open communication with a central duct 22. The central duct 22 comprises a liquid inlet 23 and an outlet 24, which are passed through the upright walls 20a of the container 20.

In addition to the solar collector systems shown, obviously, a variety of other embodiments are feasible. For example, a plurality of heat transport tubes may be mounted on one and the same flat absorber plate (for example, as shown in Figure 1 of DE—A—26 01 976), the end portions of these heat transport tubes which act as condensers being in open communication with the duct wherethrough the heat absorbing liquid medium flows.

## Claims

1. A solar energy collecting system, comprising at least one solar collector with at least one heat transport tube (1) which comprises an end portion which is sealed at its free end and which comprises an evaporation zone (1a), and an end portion with a condensation zone (1b) which is arranged at a level which is higher than that of the evaporation zone during operation, a quantity of evaporable heat transport medium which is present in the tube (1) and which evaporates in the evaporation zone during operation and which condenses in the condensation zone (1b) by giving off heat to a liquid medium flowing through a duct (5), characterized in that the heat transport medium in the tube (1) and the medium in the duct (5) are the same and that at the area of the condensation zone (1b) the heat transport tube (1) is in open communication with the duct (5) for a direct exchange of heat between the two media.

2. A solar collector, comprising at least one heat transport tube (1) which comprises at its free end a sealed end portion with an evaporation zone (1a) which receives solar radiation during operation and an end portion with a condensation zone (1b) which is arranged at a level which is higher than that of the evaporation zone during operation, characterized in that the tube end at the area of the condensation zone (1b) is constructed to be open.

## Revendications

1. Système collecteur d'énergie solaire, comportant au moins un collecteur solaire muni d'au moins un tube transporteur de chaleur (1), qui comporte une partie terminale qui est fermée à son extrémité libre et qui comporte une zone d'évaporation (1a) et une partie terminale présentant une zone de condensation (1b), qui est disposée à un niveau plus élevé que celui de la zone d'evaporation pendant le fonctionnement, une quantité de fluide de transport de chaleur évaporable qui est présent dans le tube (1) et qui s'évapore dans la zone d'évaporation pendant le fonctionnement et qui se condense dans la zone de condensation (1b) tout en cédant sa chaleur à un fluide liquide traversant une canalisation (5), caractérisé en ce que le fluide de transport de chaleur circulant dans le tube (1) et le fluide circulant dans la canalisation (5) sont les mêmes et qu'à l'endroit de la zone de condensation (1b), le tube transporteur de chaleur (1) est en communication libre avec la canalisation (5) pour un échange direct de chaleur entre les deux fluides.

2. Collecteur solaire comportant au moins un tube transporteur de chaleur (1), dont l'extrémité libre comporte une partie terminale fermée munie d'une zone d'évaporation recevant le rayonnement solaire pendant le fonctionnement et d'une partie terminale présentant une zone de condensation située en régime à un niveau plus élevé que la zone d'évaporation, caractérisé en ce que l'extrémité du tube est libre à l'endroit de la zone de condensation.

## Patentansprüche

1. Sonnenenergiespeicherndes System mit mindestens einem Solarkollektor mit mindestens einem Wärmetransportrohr (1), das einen am freien Ende geschlossenen Endteil mit einer Verdampfungszone (1a) und einen Endteil mit einer im Betrieb höher als die Verdampfungszone liegenden Kondensationszone (1b) aufweist, einer Menge verdampfbaren Wärmetransportmediums in dem Rohr (1), das im Betrieb in der Verdampfungszone verdampft und in der Kondensationszone (1b) durch Abgabe von Wärme an ein durch eine Leitung (5) strömendes flüssiges Medium kondensiert, dadurch gekennzeichnet, dass das Wärmetransportmedium in dem Rohr (1) und das Medium in der Leitung (5) dasselbe ist und dass das Wärmetransportrohr (1) an der Stelle der Kondensationszone (1b) mit der Leitung (5) zum unmittelbaren Wärmeaustauch zwischen den beiden Medien in offener Verbindung steht.

2. Solarkollektor mit mindestens einem Wärmetransportrohr (1), das am freien Ende einen geschlossenen Endteil mit einer im Betrieb Sonnenstrahlung empfangenden Verdampfungszone (1a) und einen Endteil mit einer im Betrieb höher als die Verdampfungszone liegenden Kondensationszone (1b) aufweist, dadurch gekennzeichnet, dass das Rohrende an der Stelle der Kondensationszone (1b) offen ausgebildet ist.

FIG.1a

FIG.1b

FIG.2